Europäisches Patentamt

European Patent Office

Office européen des brevets

(19)

(11) Publication number: **0 013 466**
**B1**

# EUROPEAN PATENT SPECIFICATION

(12)

(45) Date of publication of patent specification: **01.06.83**

(21) Application number: **79300059.7**

(22) Date of filing: **15.01.79**

(51) Int. Cl.³: **G 01 K 7/26, G 01 M 3/16,**
**G 01 K 7/34, H 01 C 10/02**

(54) Temperature monitoring device.

(43) Date of publication of application:
**23.07.80 Bulletin 80/15**

(45) Publication of the grant of the patent:
**01.06.83 Bulletin 83/22**

(84) Designated Contracting States:
**BE DE FR NL**

(56) References cited:
**DE - A - 1 931 361**
**DE - B - 1 134 532**
**DE - C - 662 719**
**FR - A - 2 323 213**
**US - A - 2 375 892**
**US - A - 2 548 763**
**US - A - 3 089 337**
**US - A - 3 938 385**

**Fachlexikon ABC Chemie 2. Auflage, 1979,**
**Band 2, pages 237 and 1047**

(73) Proprietor: **Spill-Fire Alarm Systems Limited**
**High Holborn House 52/54 High Holborn**
**London, WC1V 6RE (GB)**

(72) Inventor: **Norfolk, Raymond Walter**
**63 Sheepwalk Lane Townville**
**Castleford, Yorkshire (GB)**

(74) Representative: **Funge, Harry et al,**
**M'CAW & CO. 41-51 Royal Exchange Cross Street**
**Manchester M2 7BD (GB)**

Courier Press, Leamington Spa, England

# Temperature monitoring device

This invention relates to transducers and is particularly concerned with a transducer which is a temperature monitoring device.

It is desirable to be able to detect leakage of cryogenic liquids from vessels reliably and quickly in order to avoid undue wastage of the liquid and/or damage caused by same. A known method of detecting such leakage involves the use of temperature sensors, such as thermocouples and resistance bulbs, which may be arranged at different positions over the surface of the vessel or in the surrounding area. If, however, the leakage does not occur in the immediate vicinity of a sensor there may be an appreciable time lag before the sensor detects the leakage and in some cases the leakage may not affect the sensor at all due to evaporation of the liquid before reaching the sensor. This problem can be overcome by using many sensors but this is inconvenient and expensive.

An object of the present invention is to provide a transducer which can be used for monitoring temperature over a relatively large extent.

According to the invention therefore there is provided a temperature monitoring device comprising an elongate chamber in the form of a tube containing a material which undergoes a change in a monitorable property thereof in response to a predetermined change in the temperature of said material, and monitoring means for monitoring said property and thereby being responsive to said change therein, said change being an abrupt change caused by the change between liquid and solid states of a crystallisable material (as known from German Patent Specification DE 662719) characterised in that said material consists of a solution saturated with a substance which reacts to a sharp local drop in temperature in a portion of said solution through crystallisation of said substance.

With this arrangement having regard to the form of the chamber it will be appreciated that temperature can be readily monitored over a relatively large extent. For example, said chamber may be appropriately formed so that it can be applied in heat exchange relationship with the whole or a major part of a surface of large area.

The chamber preferably has flexible walls.

The solution is preferably of a liquid or fluent nature so as to conform more readily to the disposition of the chamber especially where such chamber is flexible.

The use of a fluent or liquid solution in a flexible chamber is particularly advantageous for use in monitoring the temperature at the external surface of a large vessel in so far as such chamber can be wrapped around the vessel in contact with the external surface.

With regard to the nature of the physical and/or chemical property of the solution to which the monitoring means responds this may be of any suitable kind such as, for example, electrical conductivity, dielectric properties, optical properties, radiation transmission properties, fluency, and viscosity. The device may be used for example to detect leakage of cryogenic liquid from a vessel.

The monitoring means may take any suitable form appropriate to the property of the solution to which it is to respond. Thus, where the property is electrical conductivity, the monitoring means may comprise electrodes in contact with the solution at different positions in the chamber and connected to a conductivity testing device such as an a.c. or d.c. bridge circuit. Alternatively, the monitoring means may comprise an optical device which responds to changes in light refraction or transmission through the solution, or the monitoring means may comprise a pump, for example a peristaltic pump, which continuously circulates the solution in fluent form through the chamber and responds to any change in viscosity by increasing its power consumption. Also, the monitoring means may comprise means operable to receive and respond to radiated energy, particularly light or sound waves, passing through said solution, such transmission being modified by production of crystals which reflect or deflect the radiation. An ASDIC principle may be used. In each case, the monitoring means may produce an output signal of electrical form for operating a visual and/or audible warning device and/or an automatic system.

Where the monitorable property of the solution is its conductivity, the solution may be an electrolyte in the form of a liquid, gel or paste. Such electrolyte may comprise one or more inorganic compounds in an aqueous medium.

In one embodiment of the invention, in the context of the detection of leaks in a vessel containing cryogenic liquid, the device has the chamber thereof arranged for application to the outer surface of the vessel and containing a salt solution which is saturated at a temperature just below the normal range of ambient temperature (say at −20°C), and the monitoring means is sensitive to the electrical conductivity of the solution. With this arrangement, in the event of a leak, the cryogenic liquid contacts or is close to a portion of the chamber reducing the temperature thereof and causing salt to crystallise out from the solution at least at that portion of the chamber. The overall conductivity of the substance within the chamber changes abruptly and warning can be given of the leakage. The salt solution may comprise a mixture of water, a substance such as ethylene glycol which prevent freezing at ambient temperature, a further substance such as a mixture of Boric Acid and ammonium hydroxide which dissolves in the water and renders same of good electrical conductivity despite the poor conductivity of the glycol, and an ionic salt such as potassium nitrate with which the solution is saturated.

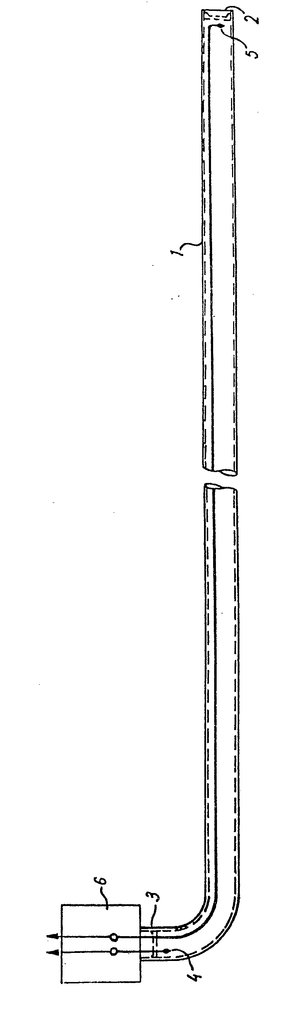

The invention will now be described further by way of example only and with reference to the accompanying drawing which is a diagrammatic view of one form of a temperature sensitive device according to the invention.

The temperature sensitive device is for use in detecting leakage of cryogenic liquid, such as liquid nitrogen, liquid natural gas or the like, from a vessel containing such liquid.

The device has a chamber 1 defined by a 4,5 m (15ft) length of 1″ diameter flexible black plastics tubing which is sealed at both ends 2, 3. The tubing contains an aqueous solution of

    ethylene glycol
    boric acid
    ammonium hydroxide
    potassium nitrate

The glycol content is such as to ensure that the solution will not freeze at a temperature of $-20°C$. The boric acid and ammonium hydroxide ensure that the solution has good electrical conductivity irrespective of the potassium nitrate content. The potassium nitrate content is such that the solution is saturated with this salt at $-20°C$.

The tube 1 is almost completely filled with the solution, a small space being left which is filled with an inert gas (say nitrogen) to accommodate expansion of the solution such as occurs on freezing of same.

With the tube 1, there are two electrodes 4, 5 terminating in platinum or other corrosion resistant tips which are in contact with the solution at opposite ends of the tube. The electrodes pass through one sealed end 3 of the tube 1 and the electrode 5 which terminates remote from said end 3 is insulated along the length of the tube.

The end 3 of the tube is secured to an electrical junction box 6 and the electrodes 4, 5 are connected to terminals in the box. The terminals in the box are also connected to one arm of a bridge circuit (not shown). The bridge circuit is such that the current flow between the electrodes 4, 5 through the solution is not normally large and/or is of an a.c. nature having a frequency greater than 1000 HZ so as to prevent polarisation problems in the solution. The bridge circuit has an output which is connected to a trigger circuit or the like which is arranged to actuate a warning system when the bridge goes appreciably out of balance.

In use, the device is arranged with the tube 1 wrapped around the outer surface of the vessel. The bridge circuit is set so that it is in balance.

In the event that cryogenic liquid leaks from the vessel and contacts or is close to a portion of the tube 1, the temperature of the liquid within such portion will drop rapidly whereby potassium nitrate will suddenly crystallise out from the solution. Removal of the ionic potassium nitrate from the solution, and conversion of the solution to a liquid/solid mixture of high solid content causes the conductivity of the solution as a whole to drop abruptly whereupon the bridge circuit goes out of balance and the warning system is actuated. The warning system may be arranged to operate a warning lamp or bell and/or may operate an automatic sprinker system in the vicinity of the vessel.

The junction box 6 is well sealed to ensure that there is no danger of electrically igniting leaking inflammable substances.

With the embodiment so far described it will be appreciated that a single device can be used to monitor a large surface area in a simple, convenient and inexpensive manner.

It is of course to be understood that the invention is not intended to be restricted to the details of the above embodiment which are described by way of example only.

For example, a smaller bore plastics tube, say $6.10^{-3}$ m ($\frac{1}{4}$ inch) or $9,6.10^{-3}$ m ($\frac{3}{8}$ inch) bore may be used. The length of the tube will be selected in accordance with the intended use. Also, the tube may be attached in convoluted form to the surface of a flexible mat which mat is applied to the surface the temperature of which is to be monitored. Where the tube is very long, say over 50 metres, a higher a.c. frequency, say in the MNZ range may be desirable to give a better signal/noise ratio.

Any suitable ionic salts other than those specifically mentioned may be used dependent on ionic mobility, conductivity, and solubility properties. Preferably, one or more salts of Group 1 elements, particularly lithium, sodium, potassium are used and possibly also rubidium, cesium, francium.

**Claims**

1. A temperature monitoring device comprising an elongate chamber in the form of a tube containing a material which undergoes a change in a monitorable property thereof in response to a predetermined change in the temperature of said material, and monitoring means for monitoring said property and thereby being responsive to said change therein, said change being an abrupt change caused by the change between liquid and solid states of a crystallisable material, characterised in that said material consists of a solution saturated with a substance which reacts to a sharp local drop in temperature in a portion of said solution through crystallisation of said substance.

2. A temperature monitoring device according to claim 1, characterised in that the chamber (1) is flexible.

3. A temperature monitoring device according to claim 1 or 2, characterised in that said monitorable property constitutes the electrical conductivity of said solution.

4. A temperature monitoring device according to claim 3, characterised in that the electrical conductivity is monitored between electrodes (4, 5) at opposite ends (2, 3) of said tube (1) with an a.c. bridge circuit (6).

5. A temperature monitoring device according to claim 3 or 4, characterised in that said solution comprises an aqueous electrolyte in the form of a liquid, paste or gel.

6. A temperature monitoring device according to claim 5, characterised in that the solution also contains ethylene glycol.

7. A temperature monitoring device according to claim 1, characterised in that the monitorable property constitutes a physical property capable of influencing transmission through said tube of radiated energy.

8. A temperature monitoring device according to claim 1, characterised in that said solution is of a fluid nature, circulation means is provided for circulating same along said tube, and said monitorable property constitutes the viscosity of the solution.

9. A temperature monitoring device according to any one of claims 1 to 8, characterised in that said device is used with a vessel containing cryogenic liquid for detecting leakage of liquid therefrom.

## Revendications

1. Dispositif de contrôle de température, comprenant une chambre allongée sous la forme d'un tube contenant une matière qui subit une variation d'une de ses propriétés contrôlables en réponse à une variation prédéterminée de la température de ladite matière, et un moyen de contrôle de ladite propriété et étant ainsi sensible à ladite variation, ladite variation étant une variation brusque provoquée par le changement entre les états liquide et solide d'une matière cristallisable, caractérisé en ce que ladite matière consiste en une solution saturée d'une substance qui réagit à une chute locale brusque de température d'une partie de ladite solution par cristallisation de ladite substance.

2. Dispositif de contrôle de température selon la revendication 1, caractérisé en ce que la chambre (1) est flexible.

3. Dispositif de contrôle de température selon la revendication 1 ou 2, caractérisé en ce que ladite propriété contrôlable consiste en la conductivité électrique de ladite solution.

4. Dispositif de contrôle de température selon la revendication 3, caractérisé en ce que la conductivité électrique est contrôlée entre les électrodes (4, 5) aux extrémités opposées (2, 3) dudit tube (1) avec un montage en pont (6) à courant alternatif.

5. Dispositif de contrôle de température selon la revendication 3 ou 4, caractérisé en ce que ladite solution comprend un électrolyte aqueux sous la forme d'un liquide, d'une pâte ou d'un gel.

6. Dispositif de contrôle de température selon la revendication 5, caractérisé en ce que la solution contient également de l'éthylèneglycol.

7. Dispositif de contrôle de température selon la revendication 1, caractérisé en ce que la propriété contrôlable consiste en une propriété physique capable d'influencer la transmission à travers le tube d'énergie rayonnée.

8. Dispositif de contrôle de température selon la revendication 1, caractérisé en ce que ladite solution est de nature fluide, un moyen de mise en circulation est prévu pour faire circuler ladite solution tout au long dudit tube, et la propriété contrôlable consiste en la viscosité de la solution.

9. Dispositif de contrôle de température selon l'une quelconque des revendications 1 à 8, caractérisé en ce que ledit dispositif est utilisé avec un récipient contenant un liquide cryogénique pour détecter une fuite de liquide de ce récipient.

## Patentansprüche

1. Temperaturüberwachungs-Vorrichtung mit einer länglichen, rohrförmigen Kammer, die ein Material enthält, das in Abhängigkeit von einer vorgegebenen Temperaturänderung einer überwachbaren Eigenschaftsänderung unterliegt, und mit Uberwachungsteilen zur Überwachung dieser Eigenschaft und die dadurch für die Eigenschaftsänderung empfindlich sind, die durch die Änderung zwischen einem flüssigen und festen Zustand eines kristallisationsfähigen Materials hervorgerufen wird, dadurch gekennzeichnet, daß das Material aus einer Lösung besteht, die mit einer Substanz gesättigt ist, die auf einen starken örtlichen Temperaturabfall in einem Teil der Lösung durch Kristallisation reagiert.

2. Vorrichtung nach Anspruch 1, dadurch gekennzeichnet, daß die Kammer (1) flexibel ist.

3. Vorrichtung nach Anspruch 1 oder 2, dadurch gekennzeichnet, daß die überwachbare Eigenschaft die elektrische Leitfähigkeit der Lösung ist.

4. Vorrichtung nach Anspruch 3, dadurch gekennzeichnet, daß die elektrische Leitfähigkeit zwischen Elektroden (4, 5) an einander gegenüberliegenden Enden (2, 3) des Rohres (1) mit einer Wechselstrombrückenschaltung gemessen wird.

5. Vorrichtung nach Anspruch 3 oder 4, dadurch gekennzeichnet, daß die Lösung einen wässrigen Elektrolyten in Form einer Flüssigkeit, Paste oder eines Gels enthält.

6. Vorrichtung nach Anspruch 5, dadurch gekennzeichnet, daß die Lösung Äthylen-Glykol enthält.

7. Vorrichtung nach Anspruch 1, dadurch gekennzeichnet, daß die überwachbare Eigenschaft eine physikalische Eigenschaft ist, die die Leitung von Strahlungsenergie durch das Rohr beeinflußt.

8. Vorrichtung nach Anspruch 1, dadurch gekennzeichnet, daß die Lösung fluid ist, daß eine Vorrichtung zum Zirkulieren der Lösung längs des Rohres (1) vorgesehen ist, und daß die überwachbare Eigenschaft die Viskosität der Lösung ist.

9. Vorrichtung nach einem der Ansprüche 1 bis 8, dadurch gekennzeichnet, daß die Vorrichtung mit einem Behälter verwendet wird, der eine kryogene Flüssigkeit zum Aufspüren von Flüssigkeitsleckage enthält.